# EUROPÄISCHE PATENTANMELDUNG

(11) **EP 1 962 246 A1**
(43) Veröffentlichungstag der Anmeldung: **27.08.2008**
(21) Anmeldenummer: 07122906.6
(22) Anmeldetag: 11.12.2007
(51) Int. Cl.: G07C 3/00, G05B 9/03

(54) **Sicherheitsvorrichtung und Sicherheitsverfahren mit mehreren Verarbeitungsstufen**

(30) Priorität: 24.02.2007 DE 102007009141
(71) Anmelder: SICK AG, 79183 Waldkirch/Breisgau (DE)
(72) Erfinder: Braune, Ingolf, 79194, Gundelfingen (DE); Rothenberger, Bernd, 79206, Breisach-Oberrimsingen (DE)
(74) Vertreter: Hehl, Ulrich

(57) **Zusammenfassung**

Es wird eine Sicherheitsvorrichtung (10) zur Überwachung eines Überwachungsbereichs mit einem Anschluss für einen Sensor (32) angegeben, insbesondere einem optoelektronischen Sensor, und einer mehrere Verarbeitungsstufen (12, 14) aufweisenden Datenverarbeitungseinrichtung, die für die sichere Auswertung von Sensordaten des Überwachungsbereichs und dafür ausgebildet ist, bei Anwesenheit eines unerlaubten Objekts in dem Überwachungsbereich oder fehlerhafter Auswertung eine Gefahrenquelle abzusichern.

Dabei ist für jede Verarbeitungsstufe (12, 14) ein Testmodul (20, 22) einer anderen Verarbeitungsstufe (12, 14) vorgesehen, das für einen Funktionstest ausgebildet ist, bei welchem das Testmodul (20, 22) dem Datenstrom vor der zu testenden Verarbeitungsstufe (12, 14) ein Testmuster (104, 108) hinzufügt und das derart verarbeitete Testmuster hinter der zu testenden Verarbeitungsstufe (12, 14) mit einem Sollergebnis vergleicht und anhand des Vergleichs die Sicherheit der Auswertung bewertet.

Es wird weiterhin ein entsprechendes Sicherheitsverfahren angegeben.

## Beschreibung

Die Erfindung betrifft eine Sicherheitsvorrichtung zur Überwachung eines Überwachungsbereichs mit einem Anschluss für einen Sensor nach dem Oberbegriff von Anspruch 1 sowie ein entsprechendes Verfahren nach dem Oberbegriff von Anspruch 12.

Sensoren zur Überwachung eines Überwachungsbereichs werden in einem weiten Anwendungsfeld eingesetzt. Dazu gehört die Automatisierungstechnik, die Diebstahlsicherung oder die Sicherung von Gebäuden und die Sicherheitstechnik. In dem letztgenannten Fall ist eine häufige Anwendung ein Sensor, der einen Gefahrenbereich absichert. Dazu wird beispielsweise der Zugangsbereich zu einer Maschine überwacht und diese Maschine abgeschaltet, wenn sich ein unerlaubtes Objekt, wie etwa ein Körperteil des Bedienpersonals, dem Gefahrenbereich zu weit nähert.

Derartige Sensoren liefern häufig Daten, die eine mehrstufige Verarbeitung erfordern. Beispielsweise kann zunächst eine Filterung der Daten erforderlich sein, bevor sie eigentlich ausgewertet werden. Wird ein Bildsensor wie eine Kamera eingesetzt, so kann neben einer Filterung die mehrstufige Verarbeitung auch deshalb erforderlich sein, weil anders die Datenfülle nicht schnell genug bearbeitet werden kann.

Bei einer sicherheitstechnischen Anwendung muss diese Auswertung sicher sein. Sicher bedeutet unter anderem eine ständige Selbstüberwachung der Sensoren und der Auswertungseinheiten. Es soll nicht nur die funktionsfähige Sicherheitsvor richtung fehlerfrei alle auftretenden Gefahrensituationen erkennen, sie muss darüber hinaus trotz einer eigenen Fehlfunktion die Absicherung des Gefahrenbereichs garantieren können. Soweit es die Auswertung betrifft, wird sie dafür häufig redundant und/oder diversitär ausgeführt. Redundant bedeutet die mehrfache Ausführung der an der Auswertung beteiligten Bauteile, so dass trotz Ausfalls eines Bauteils das oder die anderen Bauteile die Aufgaben übernehmen können. Diversitär bedeutet eine Auswertung auf unterschiedlichen Wegen, damit Aspekte wie Fehler des Algorithmus', der Implementierung oder der auswertenden Hardware erkannt werden, die mit einer ungleich geringeren Wahrscheinlichkeit an derselben Stelle auf unterschiedlichen Wegen auftreten werden.

Üblicherweise wird die Sicherheit einer Auswertung für einen Sensor in der Sicherheitstechnik durch eine zwei- oder mehrkanalige Struktur erreicht. Dabei sind alle Komponenten doppelt oder mehrfach vorhanden, führen die Auswertung möglicherweise zusätzlich in unterschiedlicher Hardware oder mit unterschiedlichen Algorithmen oder Programmiersprachen durch und überwachen sich gegenseitig. Der Nachteil einer zweikanaligen Struktur ist der höhere Aufwand für die doppelte Implementierung, die doppelten Bauteile und deren höherer Raumbedarf. Zudem müssen die Verarbeitungspfade miteinander synchronisiert und die Berechnungsergebnisse ausgetauscht und miteinander verglichen werden, was auch die Implementierung der Auswertung komplexer und fehleranfälliger macht.

Aus der DE 10 2004 031 678 A1 ist eine derartige zweikanalige Sicherheitsvorrichtung bekannt. Dabei wird zunächst eine Vorverarbeitung von Sensordaten in einem FPGA vorgenommen, und die vorverarbeiteten und dabei in ihrer Menge reduzierten Daten werden einer zweiten Verarbeitungsstufe zugeführt, nämlich einem Mikroprozessor. FPGA und Mikroprozessor sind dabei zur zweikanaligen Auswertung doppelt vorhanden. Die beiden Kanäle überwachen gegenseitig ihr Ergebnis, so dass eine Diskrepanz aufgedeckt werden kann. Da die Struktur echt zweikanalig ist, zeigt sie auch die soeben beschriebenen Nachteile des damit verbundenen höheren Aufwands.

Es ist daher Aufgabe der Erfindung, die Sicherheit einer mehrstufigen Auswertung einfacher zu gewährleisten.

Diese Aufgabe wird durch eine Sicherheitsvorrichtung gemäß Anspruch 1 beziehungsweise ein Sicherheitsverfahren gemäß Anspruch 12 gelöst. Diese Lösung hat den Vorteil, eine einkanalige Systemstruktur verwenden zu können. Die Sicherheit wird dabei in jeder Verarbeitungsstufe durch die dynamischen Tests des Verarbeitungspfades durch das Testmodul einer anderen Verarbeitungsstufe gewährleistet. Damit lassen sich bei Einhaltung der erforderlichen Sicherheitsstandards alle Hardwarekomponenten für den zweiten Kanal und die Implementierung der Auswertung in diesem Kanal einsparen. Die Eleganz des Testverfahrens liegt darin, die Tests in den normalen Verarbeitungsbetrieb zu integrieren, statt eigene Testzyklen vorzusehen. Der Test bleibt auch trotz der einkanalige Struktur diversitär, da das Testmodul einer anderen Verarbeitungsstufe angehört und somit in anderer Hardware und/oder anderer Software beziehungsweise Programmiersprache implementiert sein kann. Damit werden die Tests ohne Zeitverlust in Echtzeit mit einem Maximum an Sicherheit und einem Minimum an Implementierungsaufwand durchgeführt.

In einer vorteilhaften Ausführungsform der Erfindung ist der Anschluss und die Datenverarbeitungseinrichtung für einen Sensor mit einer Vielzahl von insbesondere zu einer Matrix oder Linie angeordneten Lichtempfangselementen ausgebildet. Der Sensor ist also bei dieser Ausführungsform ein Bildsensor, der ein pixelaufgelöstes Bild liefert. Derartige Sensoren erzeugen bei einer zeitlich auch nur einigermaßen fein aufgelösten Überwachung sehr große Datenmengen, bei denen eine mehrstufige Verarbeitung die notwendige Echtzeitauswertung erheblich erleichtert.

Bei dieser Ausführungsform sind die Sensordaten Bilddaten, und bevorzugt ist das Testmuster für den Funktionstest in der zu testenden Verarbeitungsstufe für ein Erkennen, ob überhaupt eine Verarbeitung stattfindet, und/oder ein Erkennen der Anwesenheit oder Abwesenheit eines unerlaubten Objekts in einem Teilbild geeignet. Ein Testmuster für das Erkennen, ob überhaupt eine Verarbeitung stattfindet, ist ein schneller und einfacher Test, bei dessen Fehlschlagen sich weitere Tests erübrigen. Weitere Testmuster der Anwesenheit oder Abwesenheit eines unerlaubten Objekts testen auf die wesentliche oder einzige Aufgabe der Sicherheitsvorrichtung, einen unerlaubten Objekteingriff zu erkennen.

Bevorzugt kann das Testmodul das Testmuster variieren. Damit wird sichergestellt, dass der Test nicht fälschlich ein Funktionieren anzeigt, nur weil ein spezielles Testmuster aufgrund einer Fehlauswahl oder einer besonderen Konstellation den Fehler nicht aufdecken kann.

In einer weiteren vorteilhaften Ausführungsform ist jedes Testmodul und jede Verarbeitungsstufe zweikanalig mit einer Schalteinheit zur Absicherung der Gefahrenquelle verbunden. Dies darf nicht mit einer zweikanalige Auswertung verwechselt werden, es bedeutet lediglich, dass jede Verarbeitungsstufe Zugriff auf die Schalteinheit hat. Wenn dieser Zugriff zweikanalig ausgeführt ist, kann trotz Ausfalls eines der beiden Kanäle ein Testmodul bei einem erkannten Fehler sicher auf die Schalteinheit zugreifen und die Gefahrenquelle absichern.

Die Zuordnung von Testmodul und zu testender Verarbeitungsstufe kann eine der folgenden sein: jede Verarbeitungsstufe und ihre nachfolgende Verarbeitungsstufe testen sich gegenseitig, jede Verarbeitungsstufe testet die nachfolgende, wobei die letzte Verarbeitungsstufe die erste Verarbeitungsstufe testet, oder jede Verarbeitungsstufe testet die vorhergehende, wobei die erste Verarbeitungsstufe die letzte Verarbeitungsstufe testet. Eine gegenseitige Überprüfung hat den Vorteil der Nähe im Verarbeitungsstrom und damit eine zeitnahe Funktionsüberprüfung, und zusätzlich wird die Stufe von der vorhergehenden und der nachfolgenden Stufe überprüft, was die Sicherheit erhöht. Bei den zyklischen Überprüfungen ist die Nähe innerhalb der Verarbeitungsstruktur ebenso gegeben, es müssen aber insgesamt weniger Tests ausgeführt werden, weil jede Stufe nur einmal überprüft wird.

Vorteilhafterweise kann der Funktionstest in jedem n-ten Auswertungszyklus der Datenverarbeitungseinrichtung, zumindest aber einmal innerhalb jedes Ansprechzeitintervalls durchgeführt werden. Somit erfüllt der Funktionstest eine Echtzeitanforderung, die durch die geforderte Ansprechzeit der Sicherheitsvorrichtung vorgegeben ist.

In einer weiteren vorteilhaften Ausführungsform können ein oder mehrere Testmodule mehrere oder alle Verarbeitungsstufen testen, und insbesondere trägt die Verarbeitungsstufe dieses Testmoduls oder dieser Testmodule außer dem Funktionstest nichts zur Verarbeitung des Datenstroms bei. Bei dieser Ausführungsform muss nicht in jeder Verarbeitungsstufe ein Testmodul vorhanden sein, weil ein Testmodul einer anderen Verarbeitungsstufe die Aufgabe übernimmt, den Funktionstest auszuführen. Ein solches Testmodul, welches mehrere Verarbeitungsstufen überprüft, kann für sich eine eigene Verarbeitungsstufe bilden, in der keine eigentliche Datenverarbeitung der Sensordaten vorgenommen wird. Die Verarbeitungsstufe eines Testmoduls, das andere Verarbeitungsstufen überprüft, erfüllt in diesem Falle ausschließlich Testaufgaben. Somit kann sowohl der Fall vorgesehen sein, dass eine Verarbeitungsstufe kein Testmodul besitzt, als auch der umgekehrte Fall, bei dem eine Verarbeitungsstufe ausschließlich aus dem Testmodul besteht.

In einer besonderen Ausführungsform sind die Testmodule jeweils für einen Funktionstest auch des Testmoduls der überwachten Verarbeitungsstufe ausgebildet, indem die Testmuster gezielt modifiziert werden. Es ist denkbar, dass nicht nur die eigentlichen Auswertungsaufgaben, sondern auch die Testaufgaben eines Testmoduls fehlerhaft sind. Durch eine Manipulation der Testmuster, die ein solches Testmodul aussendet, können sich in dieser Ausführungsform die Testmodule gegenseitig überwachen und damit auch derartige Fehler aufdecken, bzw. die getestete Verarbeitungsstufe überwacht, ob der Test korrekt erfolgt.

Bevorzugt ist zumindest eine Verarbeitungsstufe ein FPGA (Field Programmable Gate Array), ein (C)PLD (Complex Programmable Logic Device oder Programmable Logic Device), ein ASIC (Application Specific Integrated Circuit) oder ein Mikroprozessor. Gerade eine heterogene mehrstufige Auswertung ist besonders vorteilhaft, weil die Aufgabe einer jeden Stufe in der vorteilhaftesten Hardware ausgeführt werden kann. Dabei können Kosten-, Geschwindigkeits- und Flexibilitätsvorteile der unterschiedlichen Hardware in der optimalen Weise miteinander verbunden werden.

In einer vorteilhaften Ausführungsform der Erfindung sind zwei Verarbeitungsstufen vorgesehen, insbesondere eine erste Verarbeitungsstufe als FPGA, ASIC oder CPLD zur datenreduzierenden Vorverarbeitung und eine zweite Verarbeitungsstufe als Mikroprozessor zur Feststellung der Anwesenheit eines unerlaubten Objekts. Dabei wird die datenreduzierende Vorverarbeitung in schneller Hardware implementiert, die beispielsweise hoch parallel ausgeführt sein kann, und die komplexere und flexiblere eigentliche Objektdetektion von einem leicht umprogrammierbaren Mikroprozessor ausgeführt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügten Zeichnungen näher erläutert. Die Abbildungen der Zeichnungen zeigen in:
- Fig. 1: ein Blockschaltbild einer ersten Ausführungsform der Erfindung mit zwei Verarbeitungsstufen;
- Fig. 2: ein vereinfachtes Blockschaltbild einer zweiten Ausführungsform der Erfindung mit n sich gegenseitig überprüfenden Verarbeitungsstufen;
- Fig. 3: ein vereinfachtes Blockschaltbild gemäß Fig. 2 mit einer alternativen dritten Ausführungsform der Erfindung mit n sich zyklisch überprüfenden Verarbeitungsstufen und
- Fig. 4: eine schematische Darstellung von Bilddaten vor und nach der ersten Verarbeitungsstufe mit Testmustern zur Erläuterung des erfindungsgemäßen Sicherheitsverfahrens.

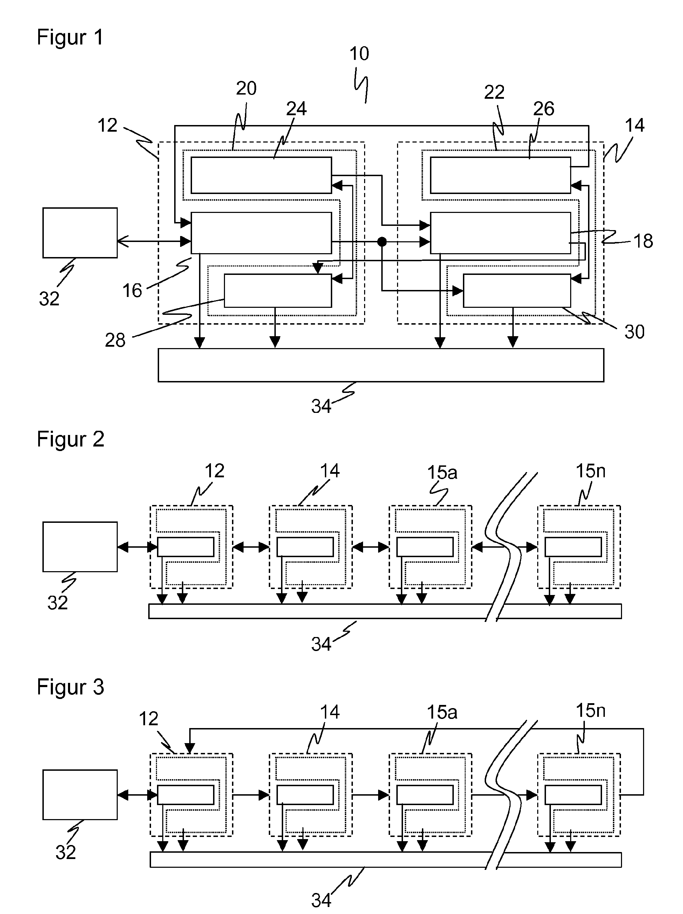

Figur 1 zeigt ein Blockschaltbild eine Sicherheitsvorrichtung 10 gemäß einer ersten Ausführungsform der Erfindung. Die Sicherheitsvorrichtung 10 weist eine erste Verarbeitungsstufe 12 und eine nachgeschaltete zweite Verarbeitungsstufe 14 auf.

In der ersten und zweiten Verarbeitungsstufe 12, 14 ist jeweils eine eigentliche erste und zweite Verarbeitungseinrichtung 16, 18 sowie ein erstes und zweites Testmodul 20, 22 vorgesehen. Das erste und zweite Testmodul 20, 22 wiederum weist jeweils einen Testgenerator 24, 26 sowie einen damit zum gegenseitigen Datenaustausch verbundenen Vergleicher 28, 30 auf. Die Verarbeitungsstufen 12 und 14 und ihre Komponenten können in jeder geeigneten Hardware umgesetzt sein, beispielsweise als FPGA (Field Programmable Gate Array), (C)PLD (Complex Programmable Logic Device oder Programmable Logic Device), ASIC (Application Specific Integrated Circuit) oder Mikroprozessor.

Ein Sensor 32 ist über einen Anschluss der ersten Verarbeitungsstufe 12 mit der Verarbeitungseinrichtung 16 verbunden und kann auf diesem Wege Sensordaten an die Verarbeitungseinrichtung 16 übergeben. Umgekehrt kann auch die erste Verarbeitungsstufe Daten an den Sensor 32 senden, um dessen Funktionsfähigkeit zu überprüfen. Dieser Anschluss kann als digitale, serielle oder parallele Schnittstelle, als Feldbusschnittstelle oder als Netzwerkschnittstelle ausgelegt sein. Die Schnittstelle ist sicher, beispielsweise mehrkanalig ausgeführt.

Der Sensor 32 kann grundsätzlich ein beliebiger Sensor sein, etwa ein Berührungssensor, ist aber bevorzugt ein optoelektronischer Sensor. Insbesondere kann der Sensor 32 als Bildsensor vorgesehen sein, also als Kamera oder dergleichen, die ein pixelaufgelöstes Bild liefert. Dazu ist in dem Sensor 32 ein Bildaufnahmechip vorgesehen, der ein CCD- oder CMOS-Chip sein kann. Dieser Chip kann je nach Anwendung linien- oder matrixförmig sein.

In beiden Verarbeitungsstufen 12, 14 haben sowohl die Verarbeitungseinrichtungen 16, 18 als auch die Testmodule 20, 22 jeweils Zugriff auf eine Schalteinheit 34. Jede dieser Verbindungen ist zweikanalig ausgeführt, damit die Schaltinformation auch bei Störung eines Kanals sicher die Schalteinheit erreicht. Die Schalteinheit 34 ist vorzugsweise digital ausgeführt und erzeugt ein Stoppsignal für eine Maschine. Dieser Signalausgang 34 wird in der Sicherheitstechnik als OSSD (Output Signal Switching Device) bezeichnet.

Die erste Verarbeitungseinrichtung 16 ist mit der zweiten Verarbeitungseinrichtung 18 verbunden. Dies ist der eigentliche Datenauswertungspfad, mit denen der Datenstrom des Sensors 32 zweistufig ausgewertet wird.

Der erste Testgenerator 24 ist ebenfalls mit der zweiten Verarbeitungseinrichtung 18 verbunden, um dem Datenstrom nach der ersten Verarbeitungseinrichtung 16 ein Testmuster hinzuzufügen. Analog ist der zweite Testgenerator 26 mit der ersten Verarbeitungseinrichtung 16 verbunden, um den Daten des Sensors 32 ein Testmuster hinzuzufügen.

Umgekehrt ist die zweite Verarbeitungseinrichtung 18 mit dem ersten Vergleicher 28 verbunden, damit der erste Vergleicher 28 das von dem ersten Testgenerator 24 in den Datenstrom eingeschleuste Testmuster nach der Auswertung durch die zweite Verarbeitungseinrichtung 18 mit einem erwarteten Ergebnis vergleichen kann. Analog ist die erste Verarbeitungseinrichtung 16 mit dem zweiten Vergleicher 30 verbunden, damit der zweite Vergleicher 30 das von dem zweiten Testgenerator 26 in den Datenstrom eingeschleuste Testmuster nach der Auswertung durch die erste Verarbeitungseinrichtung 16 mit einem erwarteten Ergebnis vergleichen kann. Das Testmuster und das erwartete Ergebnis kann jeweils zwischen den Testgeneratoren 24, 26 und den Vergleichern 28, 30 innerhalb eines Testmoduls 20, 22 ausgetauscht werden.

Die Sicherheitsvorrichtung 10 arbeitet dann im Betrieb wie folgt: der Sensor 32 überwacht eine potentielle Gefahrenquelle, beispielsweise eine gefährliche Maschine wie einen Automaten. Sobald die Sicherheitsvorrichtung 10 in der im folgenden beschriebenen Weise einen unerlaubten Objekteingriff oder die Fehlfunktion einer beteiligten Komponente erkennt, wird ein Abschaltsignal durch die Schalteinheit 34 generiert, das die gefährliche Maschine sofort ausschaltet und damit die Gefahrenquelle absichert.

Die Daten des Sensors 32 werden in der ersten und zweiten Verarbeitungseinrichtung 16, 18 ausgewertet, um die Anwesenheit eines unerlaubten Objekts festzustellen. Die erste Verarbeitungseinrichtung 16 überprüft zusätzlich, ob der Sensor 32 noch Daten liefert. Ist das nicht der Fall, so gibt sie ein Abschaltsignal an die Schalteinheit 34 aus. Stellt die zweite Verarbeitungseinrichtung 18 nach vollständiger zweistufiger Auswertung der Sensordaten die Anwesenheit eines unerlaubten Objekts fest, so gibt sie ebenfalls ein Abschaltsignal an die Schalteinheit 34 aus. Das gleiche geschieht, wenn die zweite Verarbeitungseinrichtung 18 keine Daten der ersten Verarbeitungseinrichtung 16 mehr erhält oder eine Fehlfunktion des Sensors 32 feststellt.

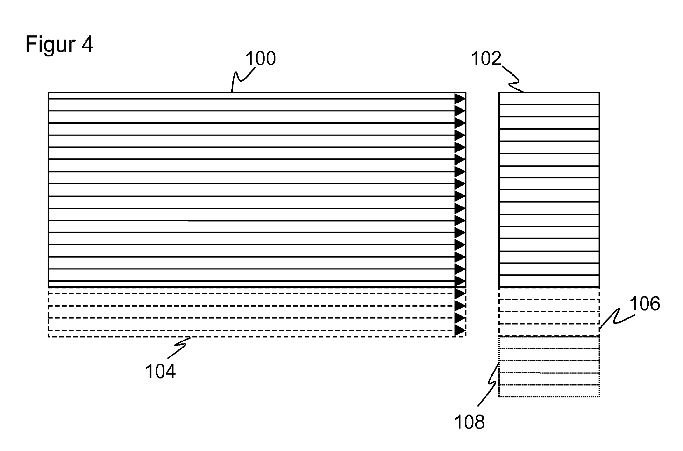

Die beiden Testmodule 20, 22 überwachen kreuzweise die Funktionsfähigkeit der ersten und zweiten Verarbeitungseinrichtung 16, 18 und auch gegenseitig die Funktionsfähigkeit des jeweils anderen Testmoduls 22, 20. Dazu schleust das zweite Testmodul 22 über seinen zweiten Testgenerator 26 ein Testmuster in den Datenstrom von Sensor 32 zur ersten Verarbeitungseinrichtung 16 ein oder fügt es dem Datenstrom hinzu. Die Ausgestaltung eines solchen Testmusters und das Anfügen an den Datenstrom wird weiter unten im Zusammenhang mit der Figur 4 noch genauer erläutert.

Das Testmuster wird in der ersten Verarbeitungseinrichtung 16 gemeinsam mit den Sensordaten verarbeitet. Bei der Weiterleitung des Datenstrom von der ersten Verarbeitungseinrichtung 16 zu der zweiten Verarbeitungseinrichtung 18 werden die Daten auch von dem zweiten Vergleicher 30 abgegriffen und das verarbeitete Testmuster mit einem erwarteten Ergebnis dieser Verarbeitung verglichen. Diese Erwartungshaltung sendet der zweite Testgenerator 26 an den zweiten Vergleicher 30, oder alternativ sendet der zweite Testgenerator 26 das unverarbeitete Testmuster an den zweiten Vergleicher 30, der daraus selbst die Erwartungshaltung generiert. Stellt der zweite Vergleicher 30 einen Unterschied zwischen verarbeitetem Testmuster und Erwartungshaltung fest, so gibt er ein Abschaltsignal an die Schalteinheit 34 aus.

In ganz analoger Weise überprüft das erste Testmodul 20 die korrekte Funktion der zweiten Verarbeitungseinrichtung 18, wobei der erste Vergleicher 28 im Falle einer Fehlfunktion ebenfalls ein Abschaltsignal an die Schalteinheit 34 ausgibt.

Auf diese Weise überprüfen sich die Verarbeitungsstufen 12, 14 gegenseitig. Sie überwachen weiterhin mindestens doppelt die Funktionsfähigkeit der Schnittstelle. Diese Überprüfungen sind, wenn die Verarbeitungsstufen 12, 14 in unterschiedlicher Hardware oder zumindest unterschiedlicher Software aufgebaut sind, auch diversitär. Der Test erfolgt während der eigentlichen Verarbeitung im normalen Betrieb. Es ist denkbar, den Test nicht in jedem Verarbeitungszyklus, sondern nur ein oder einige Male in jedem Ansprechzeitintervall durchzuführen. Damit ist gewährleistet, dass ein Ausfall innerhalb der Ansprechzeit erkannt wird.

Die Testgeneratoren 24, 26 können das von ihnen in den Datenstrom eingespeiste Testmuster variieren, um systematische Fehler beim Testgenerieren, bei der Auswertung oder später beim Vergleichen auszuschließen. Ein statischer Test mit einem gleichbleibenden Testmuster könnte aufgrund eines Fehlers des Testverfahrens einen eigentlich aufzudeckenden Fehler in der Verarbeitungseinrichtung 16, 18 übersehen. Die Wahrscheinlichkeit für einen solchen doppelten Fehler reduziert sich zu einem dem Verschwinden nahe kommenden Grad, wenn die Testmuster dynamisch variiert sind.

Weiterhin ist auch in einer weiteren Ausführungsform der Erfindung denkbar, dass die Testmodule 20, 22 die Testmuster des jeweils anderen Testmoduls 22, 20 manipulieren und in einer Art Metatest die Funktionsfähigkeit der Testmodule überprüfen. Das Verfahren ist dabei ganz analog dem oben beschriebenen. Der Testgenerator 24, 26 greift dabei in den Datenstrom zwischen dem zu überprüfenden Testgenerator und der zugehörigen Verarbeitungseinheit ein, manipuliert das Testmuster und greift das Testergebnis des zu überprüfenden Vergleichers 28, 30 ab. Wenn dieser Vergleicher 28, 30 nicht zu dem erwarteten Testergebnis gekommen ist, muss er als defekt gelten, und es wird ein Abschaltsignal erzeugt.

Eine Verallgemeinerung der zweistufigen Verarbeitung gemäß Figur 1 zu einer n-stufigen Verarbeitung in einer zweiten und dritten Ausführungsform der Erfindung ist in den Figuren 2 und 3 dargestellt. Der ersten Verarbeitungsstufe 12 und der zweiten Verarbeitungsstufe 14 sind weitere Verarbeitungsstufen 15a, ..., 15n nachgeordnet. Jede Verarbeitungsstufe weist eine eigentliche Verarbeitungseinrichtung und ein Testmodul auf, die beide eine sichere, zweikanalige Verbindung zu der Schalteinheit 34 haben, um ein Abschaltsignal sicher erzeugen zu können. Wie jeweils durch einen Doppelpfeil angedeutet, überprüfen sich benachbarte Verarbeitungsstufen gemäß Figur 2 gegenseitig. Dazu sind jeweils dieselben Verbindungen nötig, wie sie auch im Zusammenhang mit Figur 1 erläutert worden sind, die der besseren Übersichtlichkeit halber in Figur 2 weggelassen sind. Diese Art der Überprüfung in einer n-Kette überprüft jede mittlere Verarbeitungsstufe außer der ersten und der letzten im Datenstrom doppelt, nämlich sowohl stromaufwärts wie auch stromabwärts.

Alternativ kann eine solche n-Kette wie in Figur 3 dargestellt auch nur zyklisch jeweils die nachgeordnete Verarbeitungsstufe überprüfen, wobei die letzte Verarbeitungsstufe dann die erste überprüft. Diese Richtung kann auch umgekehrt sein, so dass die jeweils vorgeordnete Verarbeitungsstufe überprüft wird und die erste Verarbeitungsstufe die letzte Verarbeitungsstufe überprüft. Dabei müssen weniger Überprüfungen stattfinden als bei der Ausführungsform gemäß Figur 2. Auch hier ist die Verbindung zwischen den Verarbeitungsstufen durch einen einfachen Pfeil vereinfacht dargestellt, der analog zu Figur 1 die Verbindungen der jeweiligen Elemente einer Verarbeitungsstufe mit Elementen der zu testenden Verarbeitungsstufe symbolisieren soll.

In einer nicht dargestellten weiteren alternativen Ausführungsform kann eine Verarbeitungsstufe auch nur aus dem Testmodul bestehen, so dass die zugehörige Verarbeitungseinrichtung sich auf eine bloße Weiterleitung des Sensordatenstroms beschränkt oder das Testmodul sich praktisch nur von außen in die Verarbeitungskette einklinkt. Wie auch jedes andere Testmodul kann eine solche dedizierte Testverarbeitungsstufe in Weiterbildung der Erfindung auch nicht nur eine, sondern mehrere oder alle übrigen Verarbeitungsstufen prüfen.

Anhand der stark schematisierten Figur 4 sollen nunmehr die Testmuster und mögliche Ergebnisse der einzelnen Verarbeitungsstufen dargestellt werden. Diese Erläuterung ist nur als ein Beispiel unter den zahlreichen Möglichkeiten der Verarbeitung von Sensordaten zu verstehen. In diesem Beispiel liefert der Sensor 32 Bilddaten, die ein rechteckiges Pixelbild 100 (durchgezogene Linie) darstellen. Dieses Pixelbild ist also der Datenstrom, der vom Sensor 32 der ersten Verarbeitungseinheit 16 zugeführt wird.

Aufgabe der ersten Verarbeitungseinheit 16 ist es, diese Bilddaten in einer Vorverarbeitung auszuwerten und dabei die Datenmenge stark zu reduzieren. Dieser erste Auswertungsschritt ist in ASIC oder auf einem FPGA implementiert, welches die erste Verarbeitungsstufe 12 bildet. Die Daten werden dort zeilenweise ausgewertet, beispielsweise um die Anzahl derjenigen Pixel zu bestimmen, die von einem Referenzbild abweichen, oder um in einem einzigen Binärwert anzugeben, ob überhaupt ein Abweichen vom Referenzbild vorhanden ist. Dabei muss dieser Vergleich nicht notwendig pixelweise mit einem Referenzbild vorgenommen werden, sondern kann bekannte Eigenschaften des Bildhintergrunds zu einer Art Signatur zusammenfassen und nur eine Verletzung dieser Signatur überprüfen. Diese Signatur beschreibt dabei nicht das Referenzbild als Ganzes, sondern nur die Positionen der Schwarzweiß-Übergänge im ungestörten Überwachungsbereich, wie dies in der europäischen Patentanmeldung 06024677 desselben Anmelders beschrieben ist.

Die erste Verarbeitungseinrichtung 16 komprimiert damit jede Zeile des Bildes 100 zu einer einzigen Information, ob und in welchem Maße in dieser Zeile möglicherweise ein unerlaubter Objekteingriff vorliegt. Dieses Ergebnis wird als Vektor 102 von der ersten Verarbeitungsstufe 14 an die zweite Verarbeitungsstufe 16 weitergegeben. Die Datenmenge des Bildes 100 hat sich dabei von jeweils x Werten, wobei x der Zeilenauflösung des Sensors 32 entspricht, auf einen Wert reduziert.

In der zweiten Verarbeitungseinrichtung 18 wird nun dieser Vektor 102 (durchgezogene Linie) darauf ausgewertet, ob die jeweils komprimierte Zeileninformation in Summe genügt, dass ein unerlaubter Objekteingriff vorliegt. Ein mögliches Kriterium wäre, die nicht übereinstimmenden Pixel je Zeile, die in dem Vektor 102 abgelegt sind, aufzuaddieren und mit einem Maximalwert zu vergleichen. Wenn der Vektor 102 in jeder Zeile nur jeweils einen binären Wert hält, ob in der Zeile die Verletzung einer Signatur auftritt oder nicht, könnte beispielsweise überprüft werden, ob genügend Zeilen untereinander liegen, die derart verletzt sind und die somit wiederum den Eingriff eines unerlaubten Objekts einer gewissen Mindestgröße anzeigen.

Der Vektor 102 wird auf diese Weise von der zweiten Verarbeitungseinrichtung 18 zu einem einzigen Binärwert komprimiert, der anzeigt, ob ein unerlaubter Objekteingriff vorliegt. Ist dies der Fall, wird ein Abschaltsignal über die Schalteinheit 34 generiert, andernfalls zeigt das Bild 100 einen erlaubten Zustand, und die Sicherheitsvorrichtung 10 muss nicht reagieren beziehungsweise kann anzeigen, dass kein Problem vorliegt.

Um die Funktionsfähigkeit der ersten Verarbeitungsstufe 12 zu überprüfen, fügt der zweite Testgenerator 26 dem Datenstrom vom Sensor 32 zu der ersten Verarbeitungseinrichtung 16, nämlich dem Bild 100, weitere Zeilen hinzu (gestrichelte Linie), die nicht von dem Sensor 32 stammen, sondern ein Testmuster bilden. Die erste Verarbeitungseinrichtung 16 kann diese hinzugefügten Zeilen von dem Bild 100 gar nicht unterscheiden und verarbeitet sie so, wie sie das auch mit den Bilddaten 100 tut. Somit komprimiert sie auch die hinzugefügten Zeilen 104 zu jeweils einem Wert, und dieses ausgewertete Testmuster 106 (gestrichelte Linie) wird an die vorverarbeiteten Bilddaten 102 angefügt.

Der Vektor 102, 106 wird nun an die zweite Verarbeitungseinrichtung 18 weitergegeben und zugleich von dem zweiten Vergleicher 30 abgegriffen, der das vorverarbeitete Testmuster 106 mit dem erwarteten Testergebnis vergleicht. Tritt bei diesem Vergleich eine nicht tolerierbare Diskrepanz auf, so erzeugt der Vergleicher 30 einen Abschaltbefehl an die Schalteinheit 34.

Für die umgekehrte Überprüfung der zweiten Verarbeitungseinrichtung 18 durch das erste Testmodul 20 fügt der erste Testgenerator 24 dem Datenstrom an die zweite Verarbeitungseinrichtung 18 zusätzliche vorverarbeitete Informationen 108 (gepunktete Linie) hinzu. Der Vektor 102, 106 wird also um weitere Testmusterdaten 108 verlängert. Diese Daten werden hinter der zweiten Verarbeitungseinrichtung 18 abgegriffen und mit einer Erwartungshaltung des ersten Vergleichers 28 verglichen. Deckt dieser eine Diskrepanz auf, so schaltet er über die Schalteinheit 34 die abzusichernde Maschine ab.

Als Testmuster können einfache Muster vorgesehen sein, die lediglich nachweisen, dass in den Verarbeitungsstufen 12,14 überhaupt noch eine Verarbeitung stattfindet. Für die erste Verarbeitungseinrichtung 16 können außerdem Zeilen mit einer vorgegebenen Pixelfehlerzahl, Zeilen, in denen kein Objekteingriff stattfindet, und Zeilen, in denen ein unerlaubter Objekteingriff stattfindet, verwendet werden. Damit werden alle relevanten Fälle abgedeckt.

Für die zweite Verarbeitungseinrichtung 18 können bestimmte Pixelfehlerzahlen je Zeile vorgesehen sein, die sich zu einer Gesamtsumme über dem erlaubten Maximum addieren und die einen Abschaltbefehl erzeugen müssten, sollte unterhalb dieses Maximums oder bestimmte Bereiche von untereinander liegenden Zeilen mit verletzter Signatur vorgesehen sein, deren Anzahl einmal ausreicht, um einen unerlaubten Objekteingriff zu detektieren, und einmal nicht. Auch hiermit sind alle relevanten möglichen Fälle abgedeckt und werden getestet.

Bevor die zweite Verarbeitungseinrichtung 18 abschließend eine Abschaltentscheidung trifft, wird überprüft, ob wirklich innerhalb der Daten des Vektors 102 ein Objekteingriff detektiert wurde und nicht bloß in den hinzugefügten bearbeiteten Testmusterdaten 106, 108. Anders ausgedrückt wird ein unerlaubter Objekteingriff, der jenseits des Bereiches 102 entdeckt wird, vor der eigentlichen Erzeugung eines Ausschaltbefehl ausgefiltert.

Insgesamt entsteht auf diese Weise eine Verarbeitungsstruktur, bei der ein komplexer und dynamischer Test eine einkanalige Struktur zur Herstellung der notwendigen Sicherheit überprüft. Diese Sicherheit genügt in jedem Fall der Kategorie 3 (siehe hierzu die Sicherheitsnorm EN 954-1), bei der ein Fehler nicht zum Verlust der Sicherheitsfunktion führen darf. Dabei wird der Verarbeitungspfad mit Auslösung der Sicherheitsfunktion, also dem Abschaltbefehl, ebenso wie der Verarbeitungspfad ohne Auslösung der Sicherheitsfunktion getestet. Auch die Vorschriften anderer Sicherheitsnormen, wie der IEC 61508 und 13849, die die Struktur von sicheren Steuerungen, also logischen Verarbeitungen betreffen, können erfüllt werden.

## Patentansprüche

1. Sicherheitsvorrichtung (10) zur Überwachung eines Überwachungsbereichs mit einem Anschluss für einen Sensor (32), insbesondere einem optoelektronischen Sensor, und einer mehrere Verarbeitungsstufen (12, 14) aufweisenden Datenverarbeitungseinrichtung, die für die sichere Auswertung von Sensordaten des Überwachungsbereichs und dafür ausgebildet ist, bei Anwesenheit eines unerlaubten Objekts in dem Überwachungsbereich oder fehlerhafter Auswertung eine Gefahrenquelle abzusichern, **dadurch gekennzeichnet, dass** für jede Verarbeitungsstufe (12, 14) ein Testmodul (20, 22) einer anderen Verarbeitungsstufe (12, 14) vorgesehen ist, das für einen Funktionstest ausgebildet ist, bei welchem das Testmodul (20, 22) dem Datenstrom vor der zu testenden Verarbeitungsstufe (12, 14) ein Testmuster (104, 108) hinzufügt und das derart verarbeitete Testmuster hinter der zu testenden Verarbeitungsstufe (12, 14) mit einem Sollergebnis vergleicht und anhand des Vergleichs die Korrektheit der Auswertung bewertet.

2. Sicherheitsvorrichtung (10) nach Anspruch 1, wobei der Anschluss und die Datenverarbeitungseinrichtung für einen Sensor (32) mit einer Vielzahl von insbesondere zu einer Matrix oder Linie angeordneten Lichtempfangselementen ausgebildet sind.

3. Sicherheitsvorrichtung (10) nach Anspruch 2, wobei die Sensordaten Bilddaten sind und das Testmuster (104, 108) für den Funktionstest in der zu testenden Verarbeitungsstufe (12, 14) für ein Erkennen, ob überhaupt eine Verarbeitung stattfindet, und/oder ein Erkennen der Anwesenheit oder Abwesenheit eines unerlaubten Objekts in einem Teilbild geeignet ist.

4. Sicherheitsvorrichtung (10) nach einem der vorhergehenden Ansprüche, wobei das Testmodul (20, 22) das Testmuster (104, 108) variieren kann.

5. Sicherheitsvorrichtung (10) nach einem der vorhergehenden Ansprüche, wobei jedes Testmodul (20, 22) und jede Verarbeitungsstufe (12, 14) zweikanalig mit einer Schalteinheit (34) zur Absicherung der Gefahrenquelle ver bunden ist.

6. Sicherheitsvorrichtung (10) nach einem der vorhergehenden Ansprüche, wobei die Zuordnung von Testmodul (20, 22) und zu testender Verarbeitungsstufe (12, 14, 15a, 15n) eine der folgenden ist:
- jede Verarbeitungsstufe und ihre nachfolgende Verarbeitungsstufe testen sich gegenseitig,
- jede Verarbeitungsstufe testet die nachfolgende, wobei die letzte Verarbeitungsstufe die erste Verarbeitungsstufe testet oder
- jede Verarbeitungsstufe testet die vorhergehende, wobei die erste Verarbeitungsstufe die letzte Verarbeitungsstufe testet.

7. Sicherheitsvorrichtung (10) nach einem der vorhergehenden Ansprüche, wobei der Funktionstest in jedem n-ten Auswertungszyklus der Datenverarbeitungseinrichtung, zumindest aber einmal innerhalb jedes Ansprechzeitintervalls durchgeführt werden kann.

8. Sicherheitsvorrichtung (10) nach einem der vorhergehenden Ansprüche, wobei ein oder mehrere Testmodule (20, 22) mehrere oder alle Verarbeitungsstufen (12, 14, 15a, 15n) testen können und insbesondere die Verarbeitungsstufe (12, 14, 15a, 15n) dieses Testmodul (20, 22) oder dieser Testmodule (20, 22) außer dem Funktionstest nichts zur Verarbeitung des Datenstroms beiträgt.

9. Sicherheitsvorrichtung (10) nach einem der vorhergehenden Ansprüche, wobei die Testmodule (20, 22) jeweils für einen Funktionstest auch des Testmoduls (20, 22) der überwachten Verarbeitungsstufe (12, 14) ausgebildet sind, indem die Testmuster gezielt modifiziert werden.

10. Sicherheitsvorrichtung (10) nach einem der vorhergehenden Ansprüche, wobei zumindest eine Verarbeitungsstufe (12, 14) ein FPGA, ein (C)PLD, ein ASIC oder ein Mikroprozessor ist.

11. Sicherheitsvorrichtung (10) nach einem der vorhergehenden Ansprüche, wobei zwei Verarbeitungsstufen (12, 14) vorgesehen sind, insbesondere eine erste Verarbeitungsstufe (12) als FPGA, ASIC oder CPLD zur datenreduzierenden Vorverarbeitung und eine zweite Verarbeitungsstufe (14) als Mikroprozessor oder Signalprozessor zur Feststellung der Anwesenheit eines unerlaubten Objekts.

12. Sicherheitsverfahren zur Überwachung eines Überwachungsbereichs mit einem Sensor (32), insbesondere einem optoelektronischen Sensor, wobei Sensordaten des Überwachungsbereichs in einer mehrere Verarbeitungsstufen (12, 14) aufweisenden Datenverarbeitungseinrichtung sicher ausgewertet werden, und wobei bei Anwesenheit eines unerlaubten Objekts in dem Überwachungsbereich oder fehlerhafter Auswertung eine Gefahrenquelle abgesichert wird, **dadurch gekennzeichnet, dass** jede Verarbeitungsstufe (12, 14) von einer anderen Verarbeitungsstufe (12, 14) auf Funktionsfähigkeit getestet wird, indem dem Datenstrom vor der zu testenden Verarbeitungsstufe (12, 14) ein Testmuster (104, 108) hinzufügt und das derart verarbeitete Testmuster hinter der zu testenden Verarbeitungsstufe (12, 14) mit einem Sollergebnis verglichen und anhand des Vergleichs die Korrektheit der Auswertung bewertet wird.

13. Sicherheitsverfahren nach Anspruch 12, wobei die Sensordaten Bilddaten sind und das Testmuster (104, 108) für den Funktionstest in der zu testenden Verarbeitungsstufe (12, 14) für ein Erkennen, ob überhaupt eine Verarbeitung stattfindet, und/oder ein Erkennen der Anwesenheit oder Abwesenheit eines unerlaubten Objekts in einem Teilbild geeignet ist.

14. Sicherheitsverfahren nach Anspruch 12 oder 13, wobei das Testmuster (104, 108) variiert wird.
